# EUROPEAN PATENT SPECIFICATION

(11) **EP 1 641 547 B1**
(45) Date of publication and mention of the grant of the patent: **14.11.2012**
(21) Application number: 04754273.3
(22) Date of filing: 04.06.2004
(51) Int. Cl.: B01D 39/16, B01D 29/11, B01D 45/08, B01D 46/24

(54) **FLUID TREATMENT ELEMENT**
ELEMENT ZUR FLUIDBEHANDLUNG
ELEMENT DE TRAITEMENT DE FLUIDE

(30) Priority: 06.06.2003 US 476177 P
(43) Date of publication of application: 05.04.2006
(73) Proprietor: PALL CORPORATION, Port Washington, NY 11050 (US)
(72) Inventor: KHAN, Ahamad, Y., A., Cockeysville, MD 21030 (US); BARBOZA, Steven, D., Bel Air, MD 21014 (US); NGUYEN, Son, Ngoc, Owings Mills, MD 21117 (US); WHITLOCK, Michael, B., Cortland, NY 13045 (US)
(74) Representative: Wössner, Gottfried
(86) International application number: PCT/US2004/017626
(87) International publication number: WO 2004/110592

(56) References cited:
- EP-A- 0 922 477
- EP-A- 1 155 724
- WO-A-03/035958
- US-A- 4 116 738
- US-A- 4 759 782
- US-A- 4 818 257
- US-A- 5 591 335

## Description

### FIELD OF THE INVENTION

This invention pertains to fluid treatment elements for fluid processing, including filtration and coalescing, and particularly pertains to cylindrical elements such as cartridges for inside-out and/or outside-in flow applications.

### BACKGROUND OF THE INVENTION

Depth filter elements (e.g., cartridges) formed of a nonwoven mass of melt blown fibers are widely used to filter or coalesce innumerable fluids, i.e., liquids and/or gases. Melt blown cartridges are typically made by extruding a polymer through orifices associated with a melt blowing die to form fibers that are directed to a rotating structure such as a mandrel and/or directed to a forming or transfer roller that transfers fibers to the mandrel. A mass of melt blown fibers is built up on the mandrel, and, in one process, controlled axial movement of the built up mass of fibers relative to the melt blowing die allows a cylindrical filter cartridge of indefinite length to be formed continuously. In another illustrative process, the fibers are directed and/or transferred to a rotating and translating mandrel, allowing cylindrical filter cartridges of more defined length to be formed.

Cylindrical depth filter elements having central axially elongate hollow passageways can be used in "outside-in" flow applications, e.g., wherein the fluid to be filtered passes from the outside of the element, and through the mass of fibers into the hollow passageway and then axially to an outlet at one or both ends of the passageway, and in "inside-out" flow applications, e.g., wherein the fluid to be filtered passes from the hollow passageway and through the mass of fibers to the outside of the element.

Similarly, cylindrical coalescer elements having central axially elongate hollow passageways can also be used in outside-in and inside-out flow applications. Coalescers are typically used in industrial processes to separate several phases present in fluids, i.e., gases and/or liquids. In some instances, a solids contaminant, such as a particulate or colloidal substance, will also be present in the fluid. In coalescence, one phase of the fluid passes through the mass of fibers, this phase of the fluid being referred to as the continuous phase. The other phase of the fluid tends to collect or be captured on the element medium in droplet form before passing through the fibers, this phase of the fluid being referred to as the discontinuous phase. Typically, the continuous phase is removed via one outlet, and the discontinuous phase is removed via a separate outlet.
EP-A-0 922 477 discloses a tubular fiber bed mist eliminator for removing aerosols and colloidal solids from a gaseous stream. The filter bed has at least one nonwoven sheet of hydro-entangled ethylene/chlorotrifluoro-ethylene copolymer fibers. Some embodiments include an inner and an outer cage or mesh member.
US 4,759,782 proposes coalescing filters capable of removing liquid aerosols from gaseous streams with high efficiency. The filter comprises three layers of melt blown fibers. Perforated cages are placed around or are sandwiched between these layers.

however, the present inventors have found that improvements in depth filter elements and coalescing elements are still needed. For example, it would be desirable to provide an element that maintains efficient filtration and/or efficient coalescence in inside-out flow applications that does not need a separate external reinforcement cage or wrap, particularly for use at elevated pressure and/or elevated temperature conditions. It would also be desirable to provide an element that maintains efficient filtration and/or efficient coalescence in outside-in flow applications wherein the element can be backwashed, if desired. '

The present invention provides for ameliorating at least some of the disadvantages of the prior art. These and other advantages of the present invention will be apparent from the description as set forth below.

### BRIEF SUMMARY OF THE INVENTION

The fluid treatment element according to the invention comprises a cylindrical cartridge having a central axially elongate hollow passageway ' surrounded by at least one annular fluid treatment zone comprising nonwoven melt blown fibers and at least one annular reinforcement element comprising at least one of yarn and wire as defined in claim 1.

A fluid treatment element provided according to another embodiment of the invention comprises a hollow cylindrical element comprising at least one annular fluid treatment zone comprising a mass of nonwoven melt blown fibers and at least one annular reinforcement element comprising yarn and/or wire, wherein the reinforcement element is in the mass of nonwoven melt blown fibers.

Embodiments of the fluid treatment element typically include at least first and second annular fluid treatment zones comprising nonwoven melt blown fibers. Different annular fluid treatment zones in the same fluid treatment element can have different properties. Alternatively, or additionally, different annular fluid treatment zones in the same fluid treatment element can have different fibers and/or different combination of fibers.

Some of the melt blown fibers in the first and/or second annular fluid treatment zones are entangled around, even more preferably, bonded around, the yarn and/or wire. Alternatively or additionally, in some embodiments, some of the melt blown fibers in the first and/or second annular fluid treatment zones are bonded to the yarn and/or wire.

If desired, an annular reinforcement element can be located between annular fluid treatment zones and/or two annular fluid treatment zones can be adjacent to one another. Alternatively, or additionally, an annular reinforcement element can surround or be in the outermost annular fluid treatment zone comprising nonwoven melt blown fibers.

Embodiments of the fluid treatment element can include at least first and second annular reinforcement elements. Different annular reinforcement elements in the same fluid treatment element can have different properties and/or can be formed from different materials.

Embodiments of the fluid treatment element can be used in a variety of fluid processing applications, including filtration and/or coalescing.

For example, in one embodiment, a filter is provided comprising a hollow cylindrical filter cartridge comprising at least one annular filtration zone comprising a mass of nonwoven melt blown fibers and at least one annular reinforcement element comprising at least one of yarn and wire, wherein the reinforcement element is in the mass of nonwoven melt blown fibers.

In another embodiment, a coalescer is provided comprising a hollow cylindrical coalescing element comprising at least one annular coalescing zone comprising a mass of nonwoven melt blown fibers and at least one annular reinforcement element (Comprising at least one of yarn and wire, wherein the reinforcement element is in the mass of nonwoven melt blown fibers. Typically, the coalescer also includes a classifier, e.g., surrounding the outer surface of the coalescing element.

### BRIEF DESCRIPTION OF THE DRAWINGS

Figure 1 is a schematic perspective view, partly in section, showing an exemplary embodiment of a cylindrical fluid treatment element according to the invention.

Figure 2 is a schematic perspective view, partly in section, showing another exemplary embodiment of a cylindrical fluid treatment element according to the invention.

Figure 3 is schematic perspective view, showing one apparatus for preparing fluid treatment elements according to an embodiment of the invention.

Figure 4 is schematic perspective view, showing another apparatus for preparing fluid treatment elements according to another embodiment of the invention.

Figure 5 is schematic perspective view, showing another apparatus for preparing fluid treatment elements according to another embodiment of the invention.

Figure 6 is schematic perspective view, showing another apparatus for preparing fluid treatment elements according to another embodiment of the invention.

Figure 7 is a schematic perspective view, partly in section, showing another exemplary embodiment of a cylindrical fluid treatment element according to the invention, illustrating a reinforcement element wound at a variable pitch.

Figure 8 is as schematic perspective view, partly in section, showing another exemplary embodiment of a cylindrical fluid treatment element according to the invention, illustrating a reinforcement element wound at a substantially constant pitch.

Figure 9 is a schematic perspective view, partly in section, showing another exemplary embodiment of a cylindrical fluid treatment element according to the invention, illustrating a reinforcement element having counter-current windings.

### DETAILED DESCRIPTION OF THE INVENTION

A fluid treatment element according to the invention comprises a cylindrical cartridge having a central axially elongate hollow passageway surrounded by at least one annular fluid treatment zone comprising nonwoven melt blown fibers and at least one annular reinforcement element comprising at least one of yarn and wire.

The fluid treatment element provided according to the invention comprises a hollow cylindrical element comprising at least one annular fluid treatment zone comprising nonwoven melt blown fibers and at least one annular reinforcement element comprising yarn and/or, wire, wherein the reinforcement element is wrapped into the zone comprising nonwoven melt blown fibers.

In another embodiment, the fluid treatment element comprises a hollow cylindrical element comprising at least one angular fluid treatment zone comprising nonwoven melt blown fibers and at least one annular reinforcement element comprising at least one of yarn and wire, wherein the reinforcement element is wrapped around the zone comprising nonwoven melt blown fibers:

Embodiments of the fluid treatment element typically include at least first and second annular fluid treatment zones comprising nonwoven melt blown fibers.

In an embodiment of the fluid treatment element, some of the melt blown fibers in the first and/or second annular fluid treatment zones are entangled around, preferably, bonded around, the yarn and/or wire. Alternatively or additionally, in some embodiments, some of the melt blown fibers in the first and/or second annular fluid treatment zones are bonded to the yarn and/or wire.

Embodiments of the fluid treatment element can be used in a variety of fluid processing applications, including filtration and/or coalescing. Embodiments can be used in inside-out and/or outside-in flow applications. Some embodiments of the invention can be especially suitable for applications where it is desirable to inhibit electrical imbalance and/or electrical charge build up during fluid processing, e.g., minimize the possibility that a discharge arc can be formed.

A fluid treatment element according to one preferred embodiment of he invention comprises a hollow cylindrical element comprising at least one annular fluid treatment zone comprising nonwoven melt blown fibers and at least one annular reinforcement element comprising yarn, wherein some of the nonwoven melt blown fibers in the annular fluid treatment zone are bound around the yarn in the reinforcement element.

In some embodiments of the fluid treatment element, the melt blown fibers in at least one annular fluid treatment zone comprise continuous support fibers and continuous filtration and/or coalescing fibers, the support fibers having on average a relatively larger diameter as compared to the diameter of the filtration and/or coalescing fibers.

If desired, an annular reinforcement element can be located between annular fluid treatment zones and/or two annular fluid treatment zones can be adjacent to one another. Alternatively, or additionally, an annular reinforcement element can surround, more preferably, be in, the outermost annular fluid treatment zone comprising nonwoven melt blown fibers.

In accordance with embodiments of the invention, the annular fluid treatment element can comprise a filter element and/or a coalescing element. Thus, annular fluid treatment zones can comprise annular filtration zones and/or annular coalescing zones.

For example, in one embodiment, a filter is provided comprising a hollow cylindrical filter cartridge comprising at least one annular filtration zone comprising a mass of nonwoven melt blown fibers and at least one annular reinforcement element comprising yarn and/or wire, wherein the reinforcement element is in the mass of nonwoven melt blown fibers.

In another embodiment, a coalescer is provided comprising a hollow cylindrical coalescing element comprising at least one annular coalescing zone comprising a mass of nonwoven melt blown fibers and at least one annular reinforcement element comprising yarn and/or wire wherein the reinforcement element is in the mass of nonwoven melt blown fibers. Typically, the coalescer also includes a classifier, e.g., surrounding the outer surface of the coalescing element.

In some embodiments, the fluid treatment element, e.g., the filter or coalescer, further comprises end caps at the opposite ends of the fluid treatment element, wherein at least one end includes an opening. If desired, at least one end cap can comprise a length-adjustable end cap.

Fluid treatment elements produced in accordance with embodiments of the invention can be used in inside-out and/or outside-in flow applications. In some embodiments, the fluid treatment elements can be cleaned, for example, by backwashing, e.g., a fluid treatment element can be used in an outside-in flow application, and backwashed using inside-out flow.

Fluid treatment elements produced in accordance with embodiments of the invention are especially desirable for use in inside-out flow applications at elevated differential pressure and temperature conditions. Moreover, in accordance with preferred embodiments, the reinforcement element is firmly locked in place within the fluid treatment element, and will not shift during use. Since embodiments of the invention are resistant to radial deformation (e.g., expansion) under conditions of use, drawbacks such as at least one of, typically, at least two of, damage, loss of filtration performance, loss of coalescing performance, and difficulty in removing the spent element from the element housing, are reduced. Moreover, integrally reinforced filter elements according to the invention can be easily produced, e.g., since they do not require a separate external reinforcement cage or wrap, they can be produced without requiring the separate manufacturing operation of providing a separate external reinforcement cage or wrap.

Embodiments of fluid treatment elements include at least one annular fluid treatment zone and at least one reinforcement element. However, embodiments of the invention can have any number of annular fluid treatment zones and/or any number of reinforcement elements.

A method for producing a hollow cylindrical fluid treatment element according to an embodiment of the invention comprises directing a stream of melt blown fibers toward a rotating mandrel to form an annular fluid treatment zone comprising nonwoven melt blown fibers; and, directing at least one of yarn and wire toward the rotating mandrel to form an annular reinforcement element wherein melt blown fibers in the annular fluid treatment zone entangle around, preferably, bond around; the reinforcement element.

In an another embodiment, the method comprises directing a first stream of melt blown fibers toward a rotating mandrel to form a first annular fluid treatment zone comprising nonwoven melt blown fibers; directing a second stream of melt blown fibers toward the rotating mandrel to form a second annular fluid treatment zone comprising nonwoven melt blown fibers; and, directing yarn and/or wire toward the rotating mandrel to form an annular reinforcement element wherein melt blown fibers in the first or second annular fluid treatment zone entangle around, preferably, bond around, the reinforcement element.

In yet another embodiment, a method for producing a hollow cylindrical fluid treatment element comprises directing a stream of melt-blown fibers toward a rotating roller, transferring the fibers to a rotating mandrel to form an annular fluid treatment zone comprising nonwoven melt blown fibers; and, directing yarn and/or wire toward the rotating mandrel to form an annular reinforcement element wherein melt blown fibers in the annular fluid treatment zone entangle around, preferably, bond around, the reinforcement element.

In still another embodiment of a method for producing a hollow cylindrical fluid treatment element, the method comprises directing a stream of melt blown fibers toward a rotating mandrel and a rotating roller wherein melt blown fibers impinge the rotating mandrel and the rotating roller, transferring melt blown fibers from the rotating roller to the rotating mandrel wherein the transferred fibers contact the fibers on the rotating mandrel and form an annular fluid treatment zone comprising nonwoven melt blown fibers; and, directing yarn and/or wire toward the rotating mandrel to form an annular reinforcement element wherein melt-blown fibers in the annular fluid treatment zone entangle around, in some embodiments, bond around, the reinforcement element.

Each of the components of the invention will now be described in more detail below, wherein like components have like reference numbers.

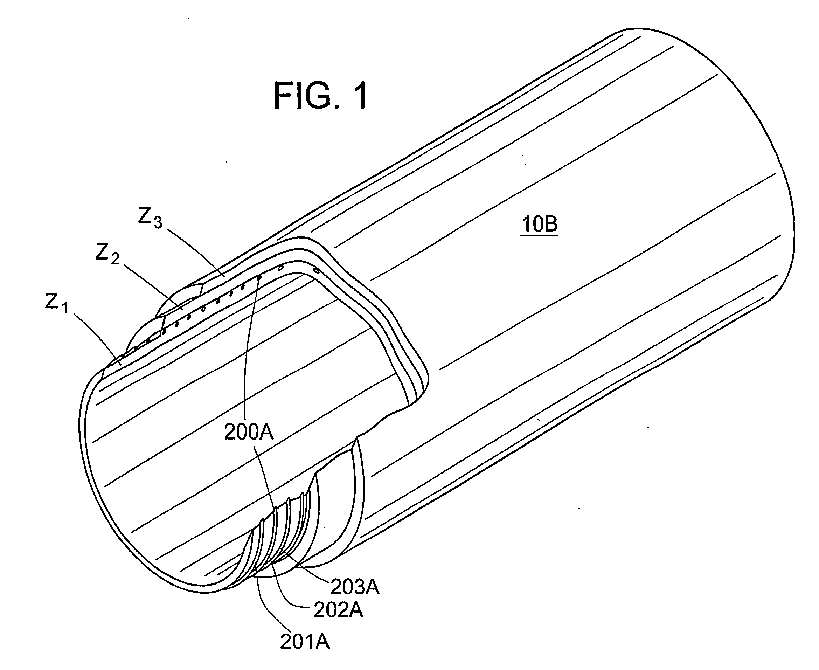

Figure 1 shows, in partly section view, one embodiment of a hollow cylindrical filter element 10B according to the invention, wherein the element includes three annular fluid treatment zones Z₁-Z₃ (each zone comprising a mass of nonwoven melt blown fibers) and a reinforcement element 200A comprising a plurality of windings 201A, 202A, 203A (and so on): In this illustrated embodiment, the reinforcement element is in the mass of fibers in the first annular fluid treatment zone Z₁.

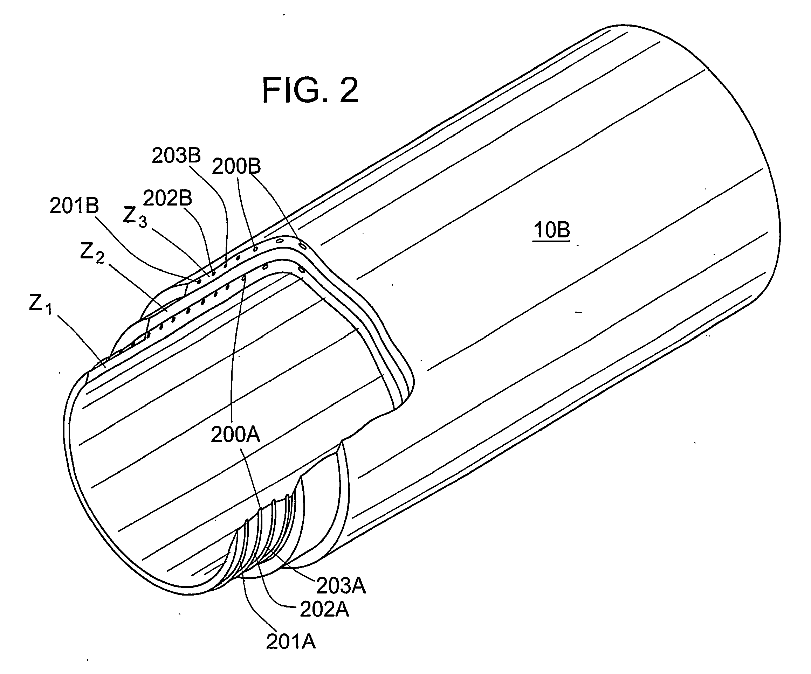

Figure 2 shows, in partly section view, another embodiment of a hollow cylindrical filter element 10B including three annular fluid treatment zones Z₁-Z₃ (each zone comprising a mass of nonwoven melt blown fibers) and two reinforcement elements 200A and 200B, comprising a plurality of windings 201A, 202A, 203A and 201B, 202B, and 203B, respectively. In this illustrated embodiment, the first reinforcement element is in the mass of fibers in the first annular fluid treatment zone Z₁, and the second reinforcement element is in the mass of fibers in the third annular fluid treatment zone Z₃.

The annular fluid treatment zone(s) Z₁, Z₂, Z₃ (and so on, if applicable) comprising melt blown fibers can be prepared in accordance with any suitable melt blowing process. As is known in the art, melt blowing refers to making non-woven elements from thermoplastic polymers using high velocity air to attenuate the melt filaments and form a fibrous mass. Suitable melt blowing processes are described in, for example, U.S. Patent Nos. 4,021,281, 4,594,202, 5,582,907, 5,591,335, 6,074,869, and 6,342,283, and International Publication Nos. WO 96/03194, WO 96/34673, and WO 00/57983.

In some embodiments, at least one annular fluid treatment zone comprising melt blown fibers includes at least two sets of nonwoven melt blown fibers wherein one set has an average diameter that is larger than the average diameter of the other set of melt blown fibers.

In an embodiment, at least one annular fluid treatment zone comprising melt blown fibers includes a mass of nonwoven melt blown continuous support and continuous filtration and/or coalescing fibers, the support fibers having on average relatively larger diameters as compared to the filtration and/or coalescing fibers, preferably wherein the relatively larger diameter support fibers define a random matrix of open areas in the annular fluid treatment zone and wherein the filtration and/or coalescing fibers are integrally co-located with the relatively larger diameter support fibers within the annular fluid treatment zone so as to be disposed physically within the random matrix of open areas defined by the support fibers. The continuous support and continuous filtration and/or coalescing fibers can be intimately entangled with one another, and in some embodiments, at least some of the support fibers are unitarily fused to some of the filtration and/or coalescing fibers.

In those embodiments wherein the fluid treatment element includes two or more annular fluid treatment zones comprising melt blown fibers, individual annular fluid treatment zones can, if desired, have different properties or characteristics. For example, at least one annular fluid treatment zone can comprise an annular filtration zone, and another annular fluid treatment zone can comprise an annular coalescing zone. Alternatively, or additionally, for example, at least one annular fluid treatment zone can include continuous support and continuous filtration and/or coalescing fibers, and at least one other annular fluid treatment zone does not include support as well as filtration and/or coalescing fibers (e.g., it only includes filtration and/or coalescing fibers). Fibers (support, filtration and/or coalescer fibers) can have different diameters in different annular fluid treatment zones. One annular fluid treatment zone can have a different fluid treatment property than another annular fluid treatment zone. Alternatively, or additionally, the fibers in the different zones can be formed from the same or a different polymer.

A wide variety of polymers are capable of being melt blown and can be used in accordance with the invention. For example, suitable polymers include polyamides (e.g., aliphatic polyamides such as nylon 6, and nylon 66; aromatic polyamides; aliphatic aromatic polyamides; and other nylons), polyolefins (e.g., including cyclic polyolefins, and polymers and copolymers of polypropylene and polyethylene), polyesters (e.g., polyethylene terephthalate (PET), polybutylene terephthalate (PBT), polycyclohexalene dimethylene terephthalate (PCT)), polyphenylene sulfide (PPS), biodegradable polymers (e.g., polylactide), liquid crystal polymers, polyetheretherketone (PEEK), polymers of vinylidene monomers such as vinyl chloride, vinyl acetate, vinylidene chloride and acrylonitrile, polystyrenes, acetals (e.g., polyoxymethylene), fluoropolymers, fluorocarbon copolymers (e.g., ethylene/fluorinated ethylene copolymers such as ethylene-chlorotrifluoro-ethylene (ECTFE) and ethylene-tetrafluoroethylene (ETFE)), and mixtures thereof. The polymers can be "virgin" polymers, or include recycled polymers. Particularly preferred are polyolefins, polyesters and nylons.

The reinforcement element 200A, 200B (and so on, if applicable) comprises at least one of yarn and wire, i.e., the reinforcement element comprises yarn and/or wire. Thus, a reinforcement element can comprise yarn, comprise wire, or comprise yarn and wire. In some embodiments, the reinforcement element consists of, or consists essentially of, yarn and/or wire.

The yarn and/or wire can have a variety of different components, elements, formats and/or configurations. For example, the yarn and/or wire can comprise at least one of, and in some embodiments, at least two of, monofilaments, multifilaments (including filaments or strands made from the same or different materials, and in some embodiments, the yarn can comprise a cord), fibrils, continuous fibers, and discontinuous fibers. Alternatively, or additionally, the yarn and/or wire can be at least one of textured, bulked, crimped, twisted, plied, and flat. A yarn can, alternatively or additionally, be "hairy" and/or include random entangled loops, as described in, for example, U.S. Patent No. 5,334,451.

In those embodiments wherein the reinforcement element comprises a yarn, the yarn is preferably a continuous filament yam, more preferably, a continuous multifilament yarn.

In some embodiments, the reinforcement element comprises an electrostatic dissipation element, e.g., the reinforcement element includes a conductive material and inhibits electrical imbalance and/or electrical charge build up by dissipating the charge to a neutral potential such as ground. For example, the contact between the conductive material of the reinforcement element of the fluid treatment element and another conductive component of the fluid treatment element and/or the fluid treatment system (e.g., a conductive portion of the filter housing, a conductive portion of a conductive end cap and/or a conductive wire, strap, spring or seal, e.g., a conductive O-ring or gasket, that is electrically coupled between the reinforcement element and a conductive portion of the housing). During fluid processing (e.g., fluid filtration or coalescing), electrical charge imbalance and/or electrical build up is coupled to ground via the conductive reinforcement element and the electrical contact. Thus, the possibility that a discharge arc can be formed is reduced or eliminated. This can be desirable in some applications wherein the formation of a discharge arc could degrade the fluid and/or damage the fluid treatment element and/or the associated components of the fluid treatment system.

In those embodiments wherein the reinforcement element comprises an electrostatic dissipation element, the reinforcement element can be formed from a conductive material, such as a metal, carbon, or a conductive polymer, or can be formed from a nonconductive material which is treated in any suitable manner to render the reinforcement element conductive. For example, a conductive additive, such as metal, carbon, or conductive polymeric particles or fibers, can be included with the nonconductive material or the nonconductive material may be coated with a conductive coating, such as a metal or carbon coating. Preferably, the electrostatic dissipation element has a high electrical conductivity or low electrical resistivity. For example, the electrostatic dissipation element typically has a surface resistivity on the order of about 10¹⁰ ohms/square or less, preferably on the order of about 1 O⁶ ohms/square or less, more preferably on the order of about 10⁴ ohms/square or less, e.g., from about 1x10³ ohms/square or less to about 7x10.³ ohms/square or more. Alternatively, or additionally, the electrostatic dissipation element typically has a resistivity on the order of about 10¹² ohm-centilneters or less, more preferably about 10¹⁰ ohm-centimeters or less. The resistivity, including the surface resisitivity can be determined by methods known to those skilled in the art, e.g., by ASTM Method D257 and/or D4496.

In providing the reinforcement element in the fluid treatment element, the yarn and/or wire is introduced into an annular fluid treatment zone while the zone is being formed. For example, as the mass of nonwoven melt blown fibers continues to build, but before the annular fluid treatment zone is completely formed, the yarn and/or wire can be introduced into the mass. Alternatively, or additionally, the yarn and/or wire can be introduced into or around a first annular fluid treatment zone as an additional (second) annular fluid treatment zone is being formed, and thus the yarn and/or wire can be introduced into the additional annular fluid treatment zone while the additional zone is being formed.

In accordance with embodiments of the invention, some of the melt blown fibers - can be entangled around, more preferably, bonded around, the reinforcement element (i.e., entangled around portions of the yarn and/or wire). Preferably, some of the melt blown fibers are bonded around the reinforcement element, i.e., portions of the fibers entangled around the yarn and/or wire bond to each other with the yarn and/or wire located therein. Alternatively, or additionally, some of the melt blown fibers can be thermally bonded and/or thermally fused to the reinforcement element.

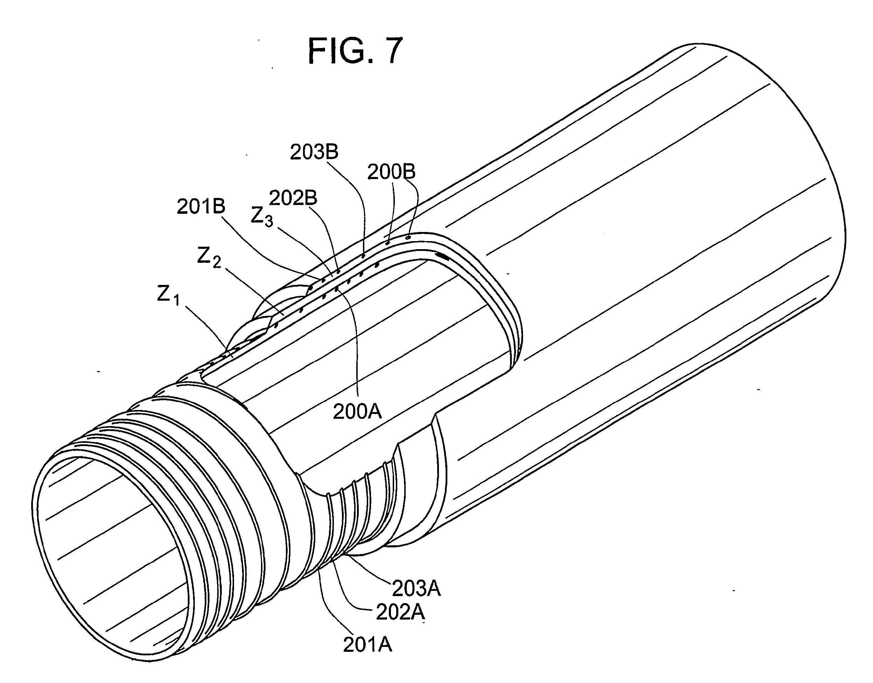

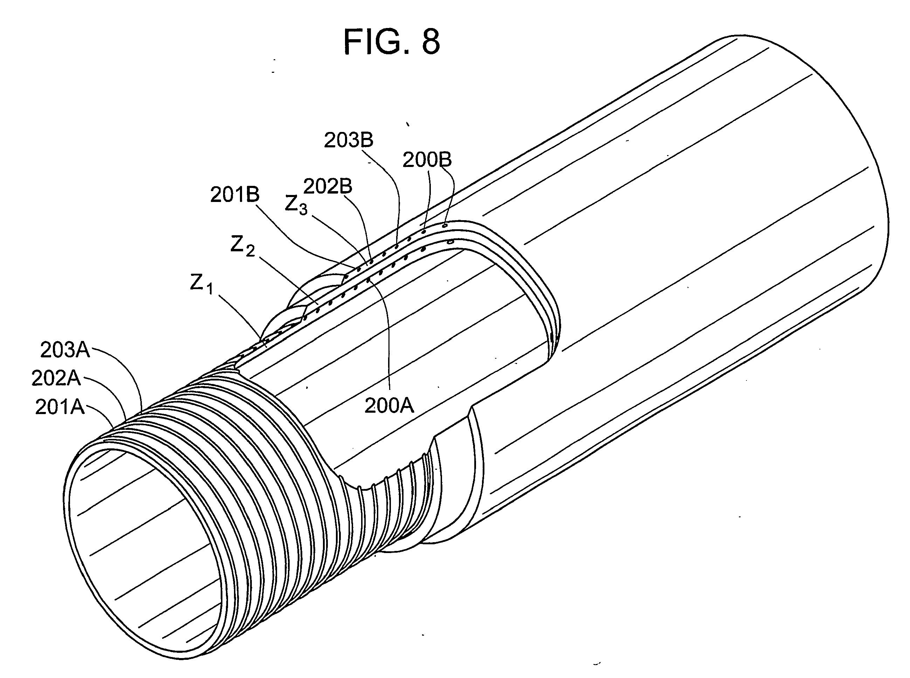

A reinforcement element is wound at any desired pitch (and the pitch can be substantially constant, or variable), typically, without overlap between adjacent windings (or turns) of the reinforcement element, preferably to allow space between adjacent turns of the reinforcement element (e.g., as shown in the partial section views in Figures 1, 2, 7, and 8, illustrating windings 201A-203A and 201B-203B). Figures 7 and 8 also illustrate, respectively, reinforcement elements having variable windings, and substantially constant windings. Allowing space between the turns leaves portions of the annular fluid treatment zone (e.g., portions of the outer surface of the annular fluid treatment zone including the reinforcement element) unobstructed, providing, in those embodiments wherein the fluid treatment element comprises a filter element, better dirt capacity of the filter, higher filtrate flow through the filter, and minimizing the pressure drop across the filter. Alternatively, or additionally, in those embodiments wherein the fluid treatment element comprises a coalescing element, allowing such space between turns provides better capture efficiency, better separation efficiency, higher flow through the coalescer, and minimizes the pressure drop across the coalescer.

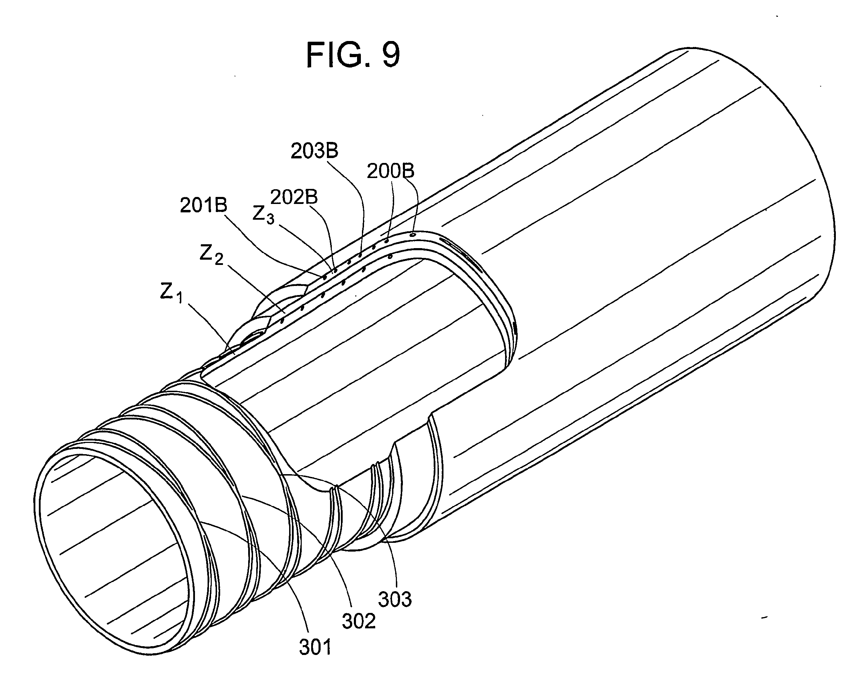

Similarly, in those embodiments wherein at least one reinforcement element comprises counter-current windings (e.g., as illustrated in Figure 9), the reinforcement element preferably includes space between the windings wound one way, and space between the windings wound another way, although, for example, there can be some overlap between the windings where the direction of the winding changes (e.g., overlap at 301, 302, and 303 as shown in Figure 9). As noted above, a reinforcement element can be wound at any desired pitch, and the pitch can be substantially constant or variable.

In some embodiments, there is overlap between the windings near the ends of the filter element, e.g., where the endcaps will be present, while the wrap is more open along the length of the filter element between the ends of the filter element.

In those embodiments wherein the fluid treatment element comprises at least two reinforcement elements, two or more reinforcement element can be wound differently.

The yarn and/or wire can include any suitable number of filaments or strands. In those embodiments wherein the reinforcement element includes yam, the reinforcement element can include any suitable denier per filament (DPF) and/or total denier.

The yarn and/or wire can be formed by a variety of methods known in the art. For example, illustrative methods for forming a continuous filament yarn include, but are not limited to, melt spinning, wet spinning, gel spinning, and dry spinning. One illustrative method for forming a yarn comprising discontinuous fibers includes, for example, textile spinning.

Additionally, the yarn and/or wire can be wound or wrapped around and/or into the annular fluid treatment zone using winding and/or wrapping techniques known in the art. Multiple filaments and/or strands can be wound or wrapped in the same and/or the opposing (counter-current) directions. The particular winding and/or wrapping conditions and parameters are controlled as is known in the art.

A variety of yarns and wires are suitable for use according to the invention and suitable yarns and wires are known in the art.

With respect to yarns, the yarn can be made of, for example, natural organic fibers (e.g., cotton, wool, and jute), synthetic fibers, glass fibers, metal, ceramics (including alumina, silica, silicates, and quartz), derivatives of cellulose (e.g., rayon), carbon/graphite fibers, any synthetic polymer, e.g., polyamides (e.g., aliphatic polyamides such as nylon 6, nylon 66, nylon 612, and nylon 46; aromatic polyamides such as NOMEX™ or KEVLAR™; aliphatic aromatic polyamides such as nylon 6T; and other nylons), polyacrylonitrile, polyoxymethylene (including homopolymers and copolymers), polyolefins (e.g., including cyclic polyolefins, and polymers and copolymers of polypropylene and polyethylene), polyetheretherketone (PEEK), polyphenylene sulfide (PPS), liquid crystal polymers, polyesters (e.g., including aromatic polyesters, polyethylene terephthalate (PET) and polybutylene terephthalate (PBT)), and mixtures and/or blends thereof.

In some embodiments, the yarn comprises a multicomponent yarn. For example, in an embodiment, the yarn comprises a bicomponent yam, more preferably, wherein one component has a different melting point than another component. Illustratively, the differences in melting point can allow one component to more efficiently bond to some of the fibers in the annular filtration zone.

With respect to wires, the wire can be made of, for example, coated or uncoated metal, preferably, stainless steel. The term "metal" herein refers to a metal by itself as well as blends of metals such as alloys. Examples of suitable metals include copper, aluminum, nickel, gold, silver and alloys that include one or more metals. Examples of alloys include stainless steel, bronze, and brass.

In some embodiments, the reinforcement element further includes a bonding agent such as resin or adhesive, e.g., coating the yarn and/or wire.

If desired, the reinforcement element (e.g., with or without a bonding agent) can be subsequently treated, e.g., cured via hot water or hot air, for stronger bonding to the melt blown fibers and/or to pre-load (for example, provide a pre-calibrated tension) the filter or coalescer.

In those embodiments wherein the fluid treatment element includes at least one additional annular fluid treatment zone comprising melt blown fibers, a reinforcement element can be located between annular fluid treatment zones and/or annular fluid treatment zones can be adjacent one another. In those embodiments wherein a reinforcement element is located between annular fluid treatment zones, the additional annular fluid treatment zone can be formed on top of the reinforcement element. If desired, the additional fluid treatment zone can be formed, for example, as the yarn and/or wire is being wrapped or wound around the first annular fluid treatment zone of melt blown fibers. In accordance with embodiments of the invention, some of the melt blown fibers of the additional fluid treatment zone can be entangled around, more preferably, bonded around, the reinforcement element. Alternatively, or additionally, some of the melt blown fibers can be thermally bonded and/or thermally fused to the reinforcement element.

The fluid treatment element (e.g., the filter and/or coalescer) can include any number of annular fluid treatment zones and/or any number of reinforcement elements. As noted above, in some embodiments, the filter and/or coalescer has two or more adjacent annular fluid treatment zones and/or has at least one reinforcement element between annular fluid treatment zones. Alternatively, or additionally, in some embodiments, the fluid treatment element has two or more reinforcement elements between annular fluid treatment zones. Different annular fluid treatment zones and/or different annular reinforcement elements in the same fluid treatment element can have different properties and/or can be formed from different materials.

Typically, the fluid treatment element is formed without a core element. However, if desired, the filter and/or coalescer can include a core element such as a perforated tube or a fibrous element (e.g., including continuous length thermoplastic cords) coaxially disposed along the inner periphery of the element, as disclosed in, for example, U.S. Patent Nos. 5,591,335, 5,653,833 and 6,342,283. -

If desired, the element and/or any annular fluid treatment zone can have any suitable efficiency rating (e.g., as evidenced by the ASTM F-795 test) and/or pore structure, e.g., a pore size (for example, as evidenced by bubble point, or by K_{L} as described in, for example, U.S. Patent No. 4,340,479), a pore rating, a retention rating, or a pore diameter (e.g., when characterized using the modified OSU F2 test as described in, for example, U.S. Patent No. 4,925,572), that reduces or allows the passage therethrough of one or more materials of interest as the fluid is passed through the element. The efficiency and/or pore structure depends on the composition of the fluid to be treated, and, for example, the desired effluent level of the treated fluid.

In some embodiments, the fluid treatment element has a generally graded pore structure, e.g., tapering from upstream to downstream (desirable for some filtration applications) or tapering from downstream to upstream (desirable for some coalescing applications). In other embodiments, the fluid treatment element has a substantially uniform pore structure, or a portion of the fluid treatment element has a graded pore structure.

The element, the annular fluid treatment zone(s) and/or the reinforcement element(s) can have any desired critical wetting surface tension (CWST, as defined in, for example, U.S. Patent No. 4,925,572). The surface characteristics of the filter, fluid treatment zone(s) and/or reinforcement element(s) can be modified (e.g., to affect the CWST, to include a surface charge, e.g., a positive or negative charge, and/or to alter the polarity or hydrophilicity of the surface) by wet or dry oxidation, by coating or depositing a polymer on the surface, or by a grafting reaction. Modifications include, e.g., irradiation, a polar or charged monomer, coating and/or curing the surface with a charged polymer, and carrying out chemical modification to attach functional groups on the surface. Grafting reactions may be activated by exposure to an energy source such as gas plasma, heat, a Van der Graff generator, ultraviolet light, electron beam, or to various other forms of radiation, or by surface etching or deposition using a plasma treatment.

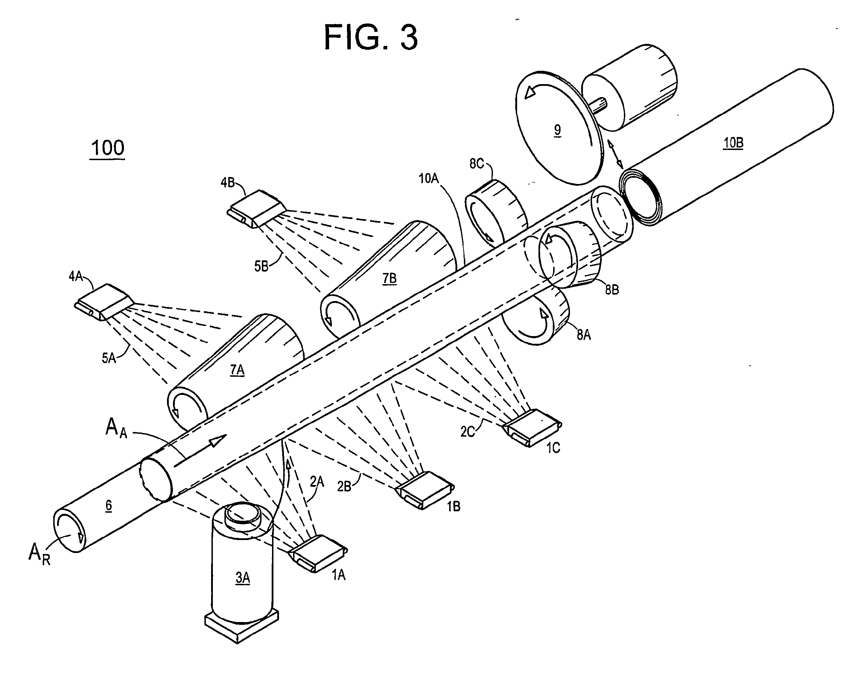

Figures 3-6 show schematic views of illustrative apparatus for preparing embodiments of fluid treatment elements according to the invention.

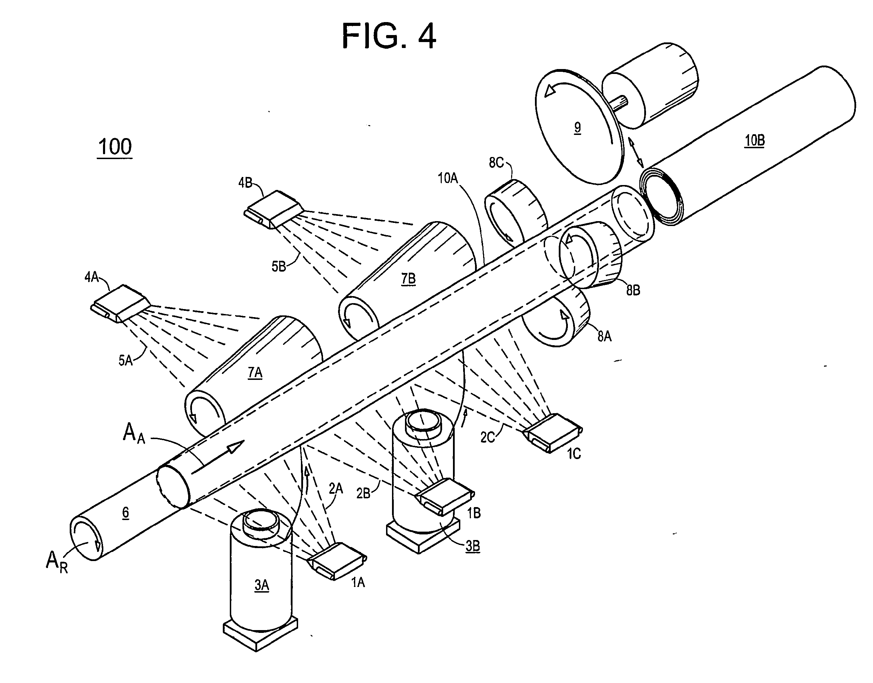

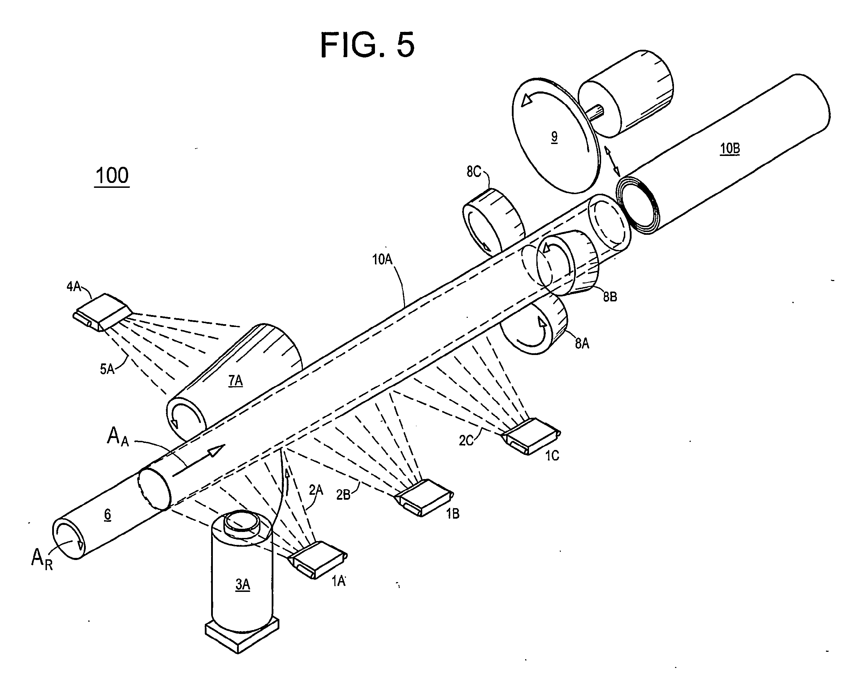

The illustrated apparatuses 100 in Figures 3-5 show the preparation of embodiments of a fluid treatment element 10B having three annular fluid treatment zones (Z₁-Z₃), each comprising continuous support fibers as well as continuous filtration and/or continuous coalescing fibers, and one reinforcement element (Figures 3 and 5, see also, Figure 1, showing reinforcement element 200A) or two reinforcement elements (Figure 4, see also, Figures 2, and 7-9, showing reinforcement elements 200A and 200B). However, in accordance with embodiments of the invention, the fluid treatment element can comprise a single annular fluid treatment zone and a single reinforcement element, or any number of annular treatment zones and/or any number of reinforcement elements. Alternatively, or additionally, the fluid treatment element (or an individual fluid treatment zone thereof) can comprise continuous filtration and/or coalescing fibers, without continuous support fibers.

The illustrated apparatuses 100 in Figures 3-5 include a rotating forming mandrel 6 upon which the cylindrical fluid treatment element will be formed, and the forming cylinder 10A will be rotated and moved axially along the mandrel (arrows A_{R} and A_{A} show the rotational and axial movement). A set of skewed drive rollers 8A-8C contacts the exterior surface of the fluid treatment element to provide the axial and rotational movement of the forming cylinder. Typically, the mandrel is attached to a drive (not shown) for rotating the mandrel. The axial movement of the forming cylinder is typically controlled by the rotation speed and angle of the skewed drive rollers 8A-8C. Ultimately, a tubular section of indefinite, but predetermined length, the section including fluid treatment zone(s) comprising the accumulated melt blown fibers as well as the wound reinforcement element(s), will extend axially beyond the bank(s) of dies or the most downstream winding device. A conventional cutting apparatus 9 (e.g., a motorized saw that can be mounted for reciprocal movement) can be operated manually or automatically, so as to sever the cylindrical tube. In some embodiments, a fluid treatment element such as a cartridge is thus formed. If desired, the cylinder can be further processed, e.g., including severing to finished length and/or adding one or more desired components (e.g., providing at least one of end caps and a classifier).

One bank of melt-blowing dies 1A-1C fed by respective extruders (not shown) is, in the illustrated apparatuses, aligned parallel to the axial movement (arrow A_{A}) of the fluid treatment element so as to sequentially melt blow continuous filtration and/or continuous coalescing fibers toward the mandrel and therein respectively create at least three annular fluid treatment zones (Z₁-Z₃) of the fluid treatment element 10B (see also, Figures 1 and 2). In the illustrated apparatus, melt-blowing dies 1A-1C discharge fiber streams 2A-2C, respectively.

Figures 3-5 also show the optional inclusion of an additional bank of melt-blowing dies 4A-4B fed by respective extruders (not shown) wherein dies 4A-4B are disposed in radially spaced relationship to conically spaced collection/transfer rollers 7A-7B. The use of an additional bank of one or more dies and one or more collection/transfer roller(s) provides for the production of continuous support fibers having a relatively larger diameter as compared to the diameter of the filtration and/or coalescing fibers formed by one or more of dies 1A-1C such that the fluid treatment element can include support fibers as well as filtration and/or coalescing fibers. In the illustrated apparatus, melt-blowing dies 4A-4B discharge fiber streams 5A-5B, respectively. The dies 4A-4B are positioned relative to one or more collection/transfer rollers in such a manner that the attenuated fibers issuing therefrom impinge on the rotating exterior surface of the roller(s) and are carried thereby so as to be presented to the stream of filtration and/or coalescing fibers issuing from the dies 1A-1C and transferred to the surface of the forming element.

In other arrangements (not shown) for producing fluid treatment elements with support fibers as well as filtration and/or coalescing fibers, the two banks of melt-blowing dies can be, for example, positioned substantially in the same plane as, but on opposite sides of, the collection transfer roller(s), i.e., the two banks of dies are axially aligned in opposed relationship to one another, as disclosed in U.S. Patent No. 5,591,335. Alternatively, the support fiber die(s) can be positioned such that the support fibers issued therefrom become entrained in the stream of filtration and/or coalescing fibers issuing from the other die(s), as disclosed in U.S. Patent No. 5,591,335.

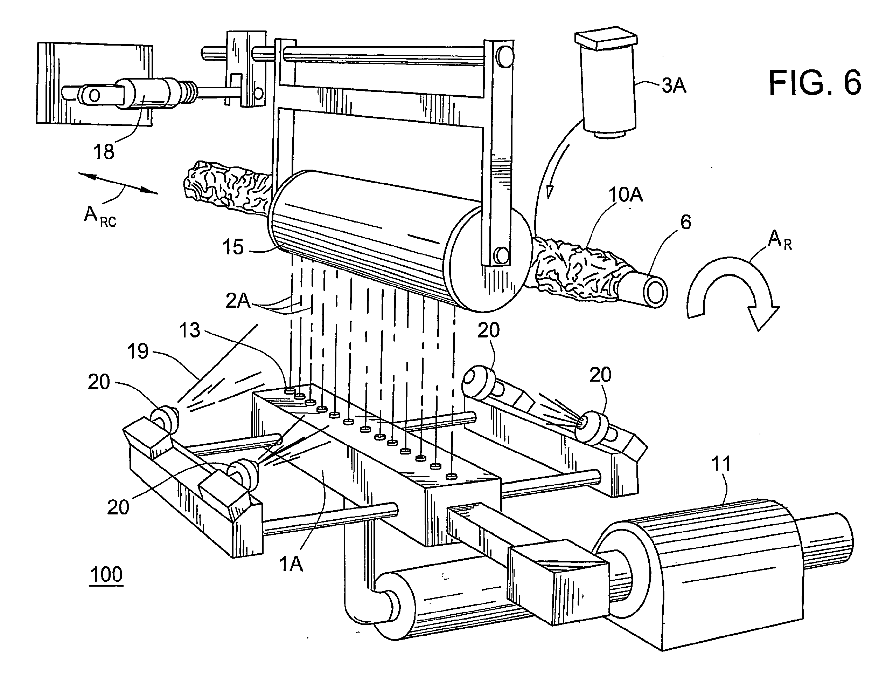

In yet another illustrative apparatus, e.g., apparatus 100 illustrated in Figure 6, the apparatus includes a rotating mandrel 6 (arrow A_{R} shows the rotational movement), that is preferably also a reciprocating mandrel (arrow ARC shows the reciprocal movement), upon which the cylindrical fluid treatment element will be formed. Typically, the mandrel is attached to a drive (not shown) for rotating, and more preferably, reciprocating, the mandrel. The illustrated apparatus also includes a cylindrical forming roll 15 which is in operative, rotating relationship with the mandrel 6. Preferably, the forming roll is biased, for example, by an air cylinder 18, so that the forming roll can be biased toward or away from the mandrel.

Figure 6 also illustrates a melt-blowing die 1A, containing a plurality of extrusion nozzles 13 wherein the die 1A is fed by an extruder 11, and a stream of melt blown fibers 2A is directed from the fiberizing nozzles toward the forming roll 15 and/or the mandrel 6. Fibers impinging on the forming roll are continuously transferred to the mandrel. As the mandrel rotates and reciprocates, the diameter of the annular mass of fibers collected on, and/or transferred to, the mandrel (forming the cylinder 10A) increases. Ultimately, a tubular section of predetermined length, the section including fluid treatment zone(s) comprising the accumulated melt blown fibers as well as the wound reinforcement element(s), is formed. In some embodiments, a fluid treatment element such as a cartridge is thus formed. If desired, the cylinder can be further processed, e.g., including severing to finished length and/or adding one or more desired components (e.g., providing at least one of end caps and a classifier).

If desired, the apparatus can provide for cooling the fibers while preparing the fluid treatment element. For example, the apparatus illustrated in Figure 6 includes nozzles 20 injecting a stream of cooling fluid (e.g., water droplets) 19 into the stream of fibers to cool the fibers.

In accordance with yet another apparatus (not shown), melt blown fibers are directed from at least one die to a rotating and reciprocating mandrel, wherein the apparatus does not include a forming roll. Preferably, the apparatus comprises a die including two rows of angled and offset fiberizing nozzles (or comprising two dies wherein the dies are arranged to provide angled and offset fiber streams) to provide crossed fiber streams impinging the mandrel and the accumulated melt blown fibers thereon, e.g., as disclosed in U.S. Patent No. 6,074,869.

The melt blowing dies 1A-1C and 4A-4B, and the fiberizing nozzles can be, in and of themselves, conventional in that they are supplied, as is known in the art, with a flow of pressurized fluid (e.g., pressurized air) which acts upon the fiber melt streams discharged from the respective dies so as to attenuate the individual fibers and propel them toward the mandrel, the forming roll, and/or the collection/transfer rollers. The extruders and/or air streams associated with the respective dies can, however, be controlled by metering pumps and flow controllers, e.g., operatively controlled by one or more master controllers (e.g., a separate master controller for the extruders and air streams associated with each bank of dies, or, more preferably, a single master controller controlling each of the extruders and air streams). As is known in the art, the extruders can be controlled as to temperature, polymer flow rate and the like, while the air streams can be controlled as to temperature, flow rate and the like, so that any number of processing conditions can be selected to obtain melt blown fibers of desired diameter. The processing conditions can be preset by an operator in the master controller(s) so that the desired annular fluid treatment zone(s) can be manufactured automatically.

Similarly, the processing conditions for wrapping or winding the reinforcement element(s) (described below) into the fluid treatment element can be preset by an operator in a master controller (preferably, the same master controller for controlling the extruders and air streams, but, if desired, this can be a different master controller than that used to control the extruders and air streams) so that the desired fluid treatment element including the reinforcement element(s) and the annular fluid treatment zone(s) can be manufactured automatically.

Figures 3, 5, and 6 show a single spool or bobbin 3A, and Figure 4 shows two spools or bobbins 3A and 3B, for use with winding devices wherein the winding device(s) wrap or wind the reinforcement element into the forming fluid treatment element. Typically, the reinforcement element (i.e., the yarn and/or wire) is fed toward the mandrel 6 into the forming cylinder 10A from the spool or bobbin through a guide (not shown) under tension, and an annular reinforcement element is formed as the forming cylinder rotates and moves axially. In those embodiments wherein the forming fluid treatment element is rotated and moved reciprocally during the formation process (e.g., as disclosed in U.S. Patent Nos. 4,594,202 and 5,582,907, see also, Figure 6), the reinforcement element can be fed into the process and an annular cross-wound reinforcement element can be formed.

A variety of winding devices, e.g., winding machines and cross winding machines, are suitable and are known in the art. As noted above, the reinforcement element is wound at any desired pitch, typically, without overlap between adjacent turns of the reinforcement element (for the winding in a given direction), preferably to allow space between adjacent turns of the reinforcement element.

The apparatus illustrated in Figures 3-5 show three dies 1A-1C forming a fluid treatment element having three annular fluid treatment zones. However, a greater number or a lesser number of dies can be utilized depending upon the particular fluid treatment element design parameters. For example, a fourth die could be added to provide a fluid ' treatment element having four annular fluid treatment zones, or only one or two dies could be utilized to form a fluid treatment element having only one or two corresponding annular zones. '

While the apparatus illustrated in Figure 6 shows a single die 1A, the apparatus can form a fluid treatment element having a plurality of annular fluid treatment zones if desired. For example, at least one of the die-to-collector distance (DCD) from the fiberizer nozzles and the mandrel and/or forming roll, the temperature and/or polymer flow rate of the extruder, and the temperature and/or flow rate of the air streams, can be controlled to provide an element with different fluid treatment zones. Additionally, or alternatively, a plurality of dies can be utilized.

Similarly, while the apparatus illustrated in Figures 3 and 4 shows another (optional) bank of dies having two dies 4A-4B, and corresponding collection/transfer rollers, a greater number or a lesser number of dies in the optional bank and/or collection/transfer rollers can be utilized depending upon the particular fluid treatment element design parameters. In some embodiments, two or more dies are associated with a common collection/transfer roller. Furthermore, as indicated, the additional bank is optional, and thus, in some embodiments, the additional bank is not required.

Moreover, since different fluid treatment zones can have different properties, one or more of these dies from the optional bank and at least one collection/transfer roller can be utilized to form one annular fluid treatment zone, wherein another fluid treatment zone in the fluid treatment element is formed without using a die (and associated collection/transfer roller) from the optional bank. For example, using the apparatus illustrated in Figure 5 for reference, a fluid treatment element can be formed wherein at least one fluid treatment zone includes support fibers (e.g., the zone is formed using die 4A and collection/transfer roller 7A) and at least one fluid treatment zone lacks support fibers (e.g., the zone is formed without using die 4A and collection/transfer roller 7A).

The apparatus can include any number of dies and/or fiberizer nozzles, and, as noted above, the dies and/or nozzles can be spaced any suitable DCD from the mandrel, forming roll and/or collecting/transfer roller as desired. The DCD can be varied during the production of embodiments of the fluid treatment element. For example, in those embodiments wherein the apparatus includes a rotating and translating mandrel, multiple passes can be made while adjusting the DCD to provide an element with different fluid treatment zones. Alternatively, or additionally, as noted above, extruders can be controlled as to temperature, polymer flow rate and the like, while the air streams can be controlled as to temperature, flow rate and the like, so that any number of processing conditions can be selected to provide zones with the desired characteristics.

The apparatus can include any number and/or combination of winding devices, dies and/or fiberizing nozzles, and they can be disposed at any location depending upon the particular fluid treatment element design parameters.

In those embodiments wherein the fluid treatment element further comprises end caps, e.g., to form a filter assembly or a coalescing assembly, the end caps can be attached to the element in any suitable manner. For example, the end caps can be thermally bonded, spin welded, sonically welded, polycapped, or bonded by means of an adhesive or a solvent at the ends of the element.

The end caps can comprise any suitable fluid impervious material which is compatible with the particular fluid being treated. Both end caps can be open end caps. Typically, one end cap is a blind end cap, and the other end cap is an open end cap. As noted above, at least one end cap can comprise a conductive end cap.

In an embodiment, at least one end cap is a length-adjustable end cap, e.g., wherein the adjustable cap includes a stationary ring member which unitarily includes (i.e., as a one-piece structure) an annular lip seal, and a connection member in moveable sealing contact with the lip seal as disclosed in pending U.S. Patent Application No. 10/105,635, filed March 26, 2002. As disclosed in that application, the lip seal is preferably a segment of a conical surface and has a proximal edge region which is unitarily joined to the ring member and an opposite distal terminal end which projects downwardly and inwardly into the opening defined by the ring member. The stationary member preferably includes a connection flange which defines an annular recess concentric with, but spaced from, the unitary lip seal. An annular spacer ring is received within the recess. During thermal bonding of the connection flange to an end of a generally cylindrical fluid treatment element, the spacer ring and the end of the fluid treatment element will both be thermally melded to respective adjacent portions of the connection flange. As such, the spacer ring will be integrally fused to the ring member.

None of the apparatuses illustrated in Figures 3-6 show forming a fluid treatment element with a core, and, as noted above, the fluid treatment element is typically formed without a core element. However, in some embodiments of the invention, the fluid treatment element includes a core element such as a fibrous element including continuous length thermoplastic cords, or a perforated tube. A fluid treatment element with a core element can be desirable for some fluid processing applications. Alternatively, or additionally; the use of a core element can be desirable in some fluid treatment element formation processes, e.g., to provide support, for example, during high heat processing, such as annealing and/or curing.

Preferably, in those embodiments wherein the fluid treatment element includes a core element, the core element provides an integral central support structure for the fluid treatment element during the production process and during use, i.e., during fluid processing. For example, in a variation of the illustrative apparatus shown in Figure 3, the rotating forming mandrel 6 comprises a length of a perforated tube (e.g., a tube formed from injection molded plastic or stainless steel), or the tube has been previously placed on the mandrel, and, as the apparatus is operated as described above, this tube will form the core element of the fluid treatment element. In a variation of the illustrative apparatus shown in Figure 6, the rotating and reciprocating mandrel 6 comprises a length of a perforated tube or the tube has been previously placed on the mandrel, and, as the apparatus is operated as described above, this tube will form the core element of the fluid treatment element.

The following examples further illustrate the invention but, of course, should not be construed as in any way limiting its scope.

### EXAMPLE

This example demonstrates that a filter according to an embodiment of the invention has resistance to radial creep at temperatures from 70° F to 150° F and a differential pressure of 50 PSID.

A filter medium including three annular filtration zones of melt blown fibers, each zone including a mass of nonwoven melt blown continuous support and filtration fibers, the support fibers having on average relatively larger diameters as compared to the filtration fibers, is formed and axially moved on a rotating mandrel, using two banks of melt blowing dies (one bank including three dies for providing filtration fibers and the other bank including two dies for providing support fibers) and two conically shaped collection/transfer rollers as generally illustrated in Figure 3. One set of fibers impinges the mandrel, and the other set of fibers impinges the collection/transfer roller and are subsequently transferred to contact the fibers on the mandrel, and a coreless (lacking a core element) cylindrical medium is formed.

The apparatus for producing the filter medium also includes a winding device including a single bobbin as generally illustrated in Figure 3, although the bobbin is arranged near die 1C in Figure 3, rather than near die 1A. Put another way, the bobbin location generally corresponds to that of bobbin 3B in Figure 4.

As the portion of the forming filter medium moves axially on the mandrel beyond the set of melt blowing dies forming the third annular filtration zone, a continuous multifilament (120 filament) twisted 1200 denier extended chain polyethylene yarn (SPECTRA®, Honeywell) is fed from a bobbin of yarn through a yarn guide and under tension into the process (fed within the nip between the collection/transfer roller 7B and the forming medium or tube) to form an annular reinforcement element within the third annular filtration zone, and some of the melt blown fibers in the annular filtration zone are thermally bound around some of the yarn fibers. The center to center distance between the yarn strands is about 0.18 inches, and the open space between the strands is about 0.15 inches.

The resultant product (e.g., a "log") is removed from the mandrel, and cut to length to provide a series of filter logs. After end capping the filter log, wherein the top cap is an open end-adjustable cap, and the bottom end cap is a closed cap, the filters are tested for resistance to radial creep at temperatures from 70° F to 150° F and differential pressures up to 50 PSID. At 50 PSID the cartridges exhibited 0.015 inch radial creep at about 70° F and 0.07 inch radial creep at about 150° F.

A filter prepared with three annular filtration zones and filter caps as described above, but without a reinforcement element, is also tested, and exhibits 0.18 inch creep at 140° F and 50 PSID.

This example shows a filter according to an embodiment of the invention has increased resistance to radial creep at elevated temperature and differential pressure when compared to a filter without a reinforcement element.

The use of the terms "a" and "an" and "the" and similar referents in the context of describing the invention (especially in the context of the following claims) are to be construed to cover both the singular and the plural, unless otherwise indicated herein or clearly contradicted by context. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Of course, variations of those preferred embodiments will become apparent to those of ordinary skill in the art upon reading the foregoing description. The inventors expect skilled artisans to employ such variations as appropriate, and the inventors intend for the invention to be practiced otherwise than as specifically described herein. Moreover, any combination of the above-described elements in all possible variations thereof is encompassed by the invention unless otherwise indicated herein or otherwise clearly contradicted by context.

## Claims

1. A fluid treatment element comprising:
a cylindrical cartridge having a central axially elongate hollow passageway surrounded by at least a first annular fluid treatment zone comprising nonwoven melt blown fibers and at least a first annular reinforcement element in the mass of nonwoven melt blown fibers comprising yarn and/or wire,
wherein some of the melt blown fibers in the first annular fluid treatment zone are entangled around and/or bonded around the yarn and/or wire,
said first annular treatment zone being formed by
directing a stream of melt blown fibers toward a rotating mandrel to form an annular fluid treatment zone comprising nonwoven melt blown fibers; and wrapping said yarn and/or wire into the zone comprising nonwoven melt blown fibers while the zone is being formed.

2. The fluid treatment element of claim 1, including at least one additional annular fluid treatment zone comprising nonwoven melt blown fibers.

3. The fluid treatment element of claim 2, wherein some of the melt blown fibers in the additional annular fluid treatment zone are entangled around the yarn and/or wire.

4. The fluid treatment element of claim 2 or 3, wherein some of the melt blown fibers in the additional annular fluid treatment zone are bonded around the yarn and/or wire.

5. The fluid treatment element of any one of claims 1 to 4, wherein some of the melt blown fibers in the first and/or additional treatment zone are bonded to the yarn and/or wire.

6. The fluid treatment element of any one of claims 1 to 5, wherein the yarn comprises a continuous yarn.

7. The fluid treatment element of any one of claims 1 to 6, wherein the yarn comprises polymeric fibers.

8. The fluid treatment element of claim 7, wherein the polymeric fibers comprise bicomponent fibers.

9. The fluid treatment element of any one of claims 1 to 8, wherein the yarn comprises carbon fibers.

10. The fluid treatment element of any one of claims 1-9 wherein the yarn comprises ceramic fibers and/or glass fibers.

11. The fluid treatment element of any one of claims 1 to 10, wherein the yarn comprises a multifilament yarn.

12. The fluid treatment element of any one of claims 1 to 11, wherein the yarn comprises a monofilament yarn.

13. The fluid treatment element of any one of claims 1 to 12, wherein the yarn comprises cord fibers.

14. The fluid treatment element of any one of claims 1 to 13, wherein the yarn comprises at least one of textured fibers, bulked fibers, fibrillated fibers, crimped fibers, fibers with entangled loops, and twisted fibers.

15. The fluid treatment element of any one of claims 1 to 14, wherein the reinforcement element comprises crimped wire.

16. The fluid treatment element of any one of claims 1 to 15, wherein the wire comprises stainless steel.

17. The fluid treatment element of any one of claims 1 to 16, wherein the reinforcement element comprises an electrostatic dissipation element comprising a conductive material.

18. The fluid treatment element of any one of claims 1 to 17, wherein the melt blown fibers comprise continuous support fibers and continuous filtration and/or coalescing fibers, the support fibers having on average a relatively larger diameter as compared to the diameter of the filtration and/or coalescing fibers.

19. The fluid treatment element of any one of claims 2 to 18; including at least two adjacent coaxial annular fluid treatment zones.

20. The fluid treatment element of any one of claims 1 to 19, comprising a coreless filter element.

21. The fluid treatment element of any one of claims 1 to 20, further comprising first and second end caps, attached to the cartridge.

22. The fluid treatment element of claim 21, wherein at least one end cap comprises an adjustable end cap.

23. The fluid treatment element of claim 21 or 22, wherein at least one end cap comprises a conductive material.

24. The fluid treatment element of any one of claims 1 to 23, wherein at least one annular fluid treatment zone comprises an annular fluid filtration zone.

25. The fluid treatment element of any one of claims 1 to 24, wherein at least one annular fluid treatment zone comprises an annular coalescing zone.

26. A method for treating a fluid comprising:
passing the fluid through the fluid treatment element of any one of claims 1 to 25.

27. The method of claim 26, comprising filtering the fluid.

28. The method of claim 26 or 27, comprising separating phases present in the fluid.

29. The method of any one of claims 26 to 28, further comprising cleaning the fluid treatment element.

30. The method of claim 29, wherein cleaning the fluid treatment element comprises backwashing the fluid treatment element.

## Patentansprüche

1. Fluidbehandlungselement, umfassend:
eine zylindrische Patrone mit einem zentralen, sich axial erstreckenden, hohlen Durchlass, umgeben von mindestens einer ersten ringförmigen Fluidbehandlungszone, welche schmelzgeblasene Nonwoven-Fasern umfasst, und mindestens einem ersten ringförmigen Verstärkungselement in der Masse von schmelzgeblasenen Nonwoven-Fasern, welches Garn und/oder Draht umfasst,
wobei einige der schmelzgeblasenen Fasern in der ersten ringförmigen Fluidbehandlungszone um das Garn und/oder um den Draht herum geschlungen und/oder um dieses/diesen herum thermisch gebunden sind,
wobei die erste ringförmige Behandlungszone gebildet ist durch
Richten eines Stroms von schmelzgeblasenen Fasern in Richtung eines rotierenden Dorns, um eine ringförmige Fluidbehandlungszone, welche schmelzgeblasene Nonwoven-Fasern umfasst, zu bilden; und
Wickeln des Garns und/oder des Drahts in die schmelzgeblasene Nonwoven-Fasern umfassende Zone hinein, während die Zone gebildet wird.

2. Fluidbehandlungselement nach Anspruch 1, umfassend mindestens eine zusätzliche ringförmige Fluidbehandlungszone, welche schmelzgeblasene Nonwoven-Fasern umfasst.

3. Fluidbehandlungselement nach Anspruch 2, wobei einige der schmelzgeblasenen Fasern in der zusätzlichen ringförmigen Fluidbehandlungszone um das Garn und/oder um den Draht herum geschlungen sind.

4. Fluidbehandlungselement nach Anspruch 2 oder 3, wobei einige der schmelzgeblasenen Fasern in der zusätzlichen ringförmigen Fluidbehandlungszone um das Garn und/oder um den Draht herum thermisch gebunden sind.

5. Fluidbehandlungselement nach einem der Ansprüche 1 bis 4, wobei einige der schmelzgeblasenen Fasern in der ersten und/oder in der zusätzlichen Behandlungszone an das Garn und/oder an den Draht gebunden sind.

6. Fluidbehandlungselement nach einem der Ansprüche 1 bis 5, wobei das Garn ein kontinuierliches Garn umfasst.

7. Fluidbehandlungselement nach einem der Ansprüche 1 bis 6, wobei das Garn polymere Fasern umfasst.

8. Fluidbehandlungselement nach Anspruch 7, wobei die polymeren Fasern Bikomponentenfasern umfassen.

9. Fluidbehandlungselement nach einem der Ansprüche 1 bis 8, wobei das Garn Kohlenstofffasern umfasst.

10. Fluidbehandlungselement nach einem der Ansprüche 1 bis 9, wobei das Garn Keramikfasern und/oder Glasfasern umfasst.

11. Fluidbehandlungselement nach einem der Ansprüche 1 bis 10, wobei das Garn ein Multifilamentgarn umfasst.

12. Fluidbehandlungselement nach einem der Ansprüche 1 bis 11, wobei das Garn ein Monofilamentgarn umfasst.

13. Fluidbehandlungselement nach einem der Ansprüche 1 bis 12, wobei das Garn Cordfasern umfasst.

14. Fluidbehandlungselement nach einem der Ansprüche 1 bis 13, wobei das Garn mindestens eine der Faserarten texturierte Fasern, gebauschte Fasern, fibrillierte Fasern, gekräuselte Fasern, Fasern mit verschlungenen Schlaufen und verzwirnte Fasern umfasst.

15. Fluidbehandlungselement nach einem der Ansprüche 1 bis 14, wobei das Verstärkungselement gekräuselten Draht umfasst.

16. Fluidbehandlungselement nach einem der Ansprüche 1 bis 15, wobei der Draht Edelstahl umfasst.

17. Fluidbehandlungselement nach einem der Ansprüche 1 bis 16, wobei das Verstärkungselement ein Elektrostatikableitungselement umfasst, welches ein leitfähiges Material umfasst.

18. Fluidbehandlungselement nach einem der Ansprüche 1 bis 17, wobei die schmelzgeblasenen Fasern kontinuierliche Stützfasern und kontinuierliche Filtrations- und/oder koaleszierende Fasern umfassen, wobei die Stützfasern im Durchschnitt einen relativ größeren Durchmesser aufweisen, verglichen mit dem Durchmesser der Filtrationsfasern und/oder der koaleszierenden Fasern.

19. Fluidbehandlungselement nach einem der Ansprüche 2 bis 18, umfassend mindestens zwei benachbarte koaxiale ringförmige Fluidbehandlungszonen.

20. Fluidbehandlungselement nach einem der Ansprüche 1 bis 19, umfassend ein kernloses Filterelement.

21. Fluidbehandlungselement nach einem der Ansprüche 1 bis 20, ferner umfassend eine erste und eine zweite Endkappe, verbunden mit der Patrone.

22. Fluidbehandlungselement nach Anspruch 21, wobei mindestens eine Endkappe eine einstellbare Endkappe umfasst.

23. Fluidbehandlungselement nach Anspruch 21 oder 22, wobei mindestens eine Endkappe ein leitfähiges Material umfasst.

24. Fluidbehandlungselement nach einem der Ansprüche 1 bis 23, wobei mindestens eine ringförmige Fluidbehandlungszone eine ringförmige Fluidfiltrationszone umfasst.

25. Fluidbehandlungselement nach einem der Ansprüche 1 bis 24, wobei mindestens eine ringförmige Fluidbehandlungszone eine ringförmige Koaleszenzzone umfasst.

26. Verfahren zum Behandeln eines Fluids, umfassend:
Hindurchleiten des Fluids durch das Fluidbehandlungselement nach einem der Ansprüche 1 bis 25.

27. Verfahren nach Anspruch 26, umfassend: Filtern des Fluids.

28. Verfahren nach Anspruch 26 oder 27, umfassend: Trennen von in dem Fluid vorhandenen Phasen.

29. Verfahren nach einem der Ansprüche 26 bis 28, ferner umfassend:
Reinigen des Fluidbehandlungselements.

30. Verfahren nach Anspruch 29, wobei das Reinigen des Fluidbehandlungselements das Rückspülen des Fluidbehandlungselements umfasst.

## Revendications

1. Elément de traitement de fluide comprenant :
une cartouche cylindrique comportant un passage creux allongé axialement central entouré par au moins une première zone de traitement de fluide annulaire comprenant des fibres soufflées mêlées non tissées et au moins un premier élément de renforcement annulaire dans la masse des fibres soufflées mêlées non tissées comprenant du fil métallique et/ou du fil,
dans lequel certaines des fibres soufflées mêlées dans la première zone de traitement de fluide annulaire sont enchevêtrées autour et/ou collées autour du fil métallique et/ou du fil,
ladite première zone de traitement annulaire étant formée en
dirigeant un courant de fibres soufflées mêlées vers un mandrin tournant pour former une zone de traitement de fluide annulaire comprenant des fibres soufflées mêlées non tissées ; et
enroulant ledit fil métallique et/ou fil dans la zone comprenant des fibres soufflées mêlées non tissées pendant que la zone est formée.

2. Elément de traitement de fluide selon la revendication 1, incluant au moins une zone de traitement de fluide annulaire supplémentaire comprenant des fibres soufflées mêlées non tissées.

3. Elément de traitement de fluide selon la revendication 2, dans lequel certaines des fibres soufflées mêlées dans la zone de traitement de fluide annulaire supplémentaire sont enchevêtrées autour du fil métallique et/ou du fil.

4. Elément de traitement de fluide selon la revendication 2 ou 3, dans lequel certaines des fibres soufflées mêlées dans la zone de traitement de fluide annulaire supplémentaire sont collées autour du fil métallique et/ou du fil.

5. Elément de traitement de fluide selon l'une quelconque des revendications 1 à 4, dans lequel certaines des fibres soufflées mêlées dans la première zone de traitement de fluide annulaire et la zone de traitement de fluide annulaire supplémentaire sont collées au fil métallique et/ou au fil.

6. Elément de traitement de fluide selon l'une quelconque des revendications 1 à 5, dans lequel le fil est composé d'un fil continu.

7. Elément de traitement de fluide selon l'une quelconque des revendications 1 à 6, dans lequel le fil est composé de fibres polymères.

8. Elément de traitement de fluide selon la revendication 7, dans lequel les fibres polymères comprennent des fibres à deux composants.

9. Elément de traitement de fluide selon l'une quelconque des revendications 1 à 8, dans lequel le fil est composé de fibres de carbone.

10. Elément de traitement de fluide selon l'une quelconque des revendications 1 à 9, dans lequel le fil est composé de fibres céramiques et/ou de fibres de verre.

11. Elément de traitement de fluide selon l'une quelconque des revendications 1 à 10, dans lequel le fil comprend un fil à filaments multiples.

12. Elément de traitement de fluide selon l'une quelconque des revendications 1 à 11, dans lequel le fil comprend un fil monofilament.

13. Elément de traitement de fluide selon l'une quelconque des revendications 1 à 12, dans lequel le fil comprend des fibres câblées.

14. Elément de traitement de fluide selon l'une quelconque des revendications 1 à 13, dans lequel le fil comprend au moins des fibres texturées, des fibres voluminisées, des fibres fibrillées, des fibres ondulées, des fibres avec des boucles enchevêtrées, et des fibres torsadées.

15. Elément de traitement de fluide selon l'une quelconque des revendications 1 à 14, dans lequel l'élément de renforcement comprend un fil métallique ondulé.

16. Elément de traitement de fluide selon l'une quelconque des revendications 1 à 15, dans lequel le fil métallique est composé d'acier inoxydable.

17. Elément de traitement de fluide selon l'une quelconque des revendications 1 à 16, dans lequel l'élément de renforcement comprend un élément de dissipation électrostatique comprenant un matériau conducteur.

18. Elément de traitement de fluide selon l'une quelconque des revendications 1 à 17, dans lequel les fibres soufflées mêlées comprennent des fibres de support continues et des fibres de filtration et/ou de coalescence continues, les fibres de support ayant en moyenne un diamètre relativement grand en comparaison du diamètre des fibres de filtration et/ou de coalescence.

19. Elément de traitement de fluide selon l'une quelconque des revendications 2 à 18, incluant au moins deux zones de traitement fluide annulaires coaxiales adjacentes.

20. Elément de traitement de fluide selon l'une quelconque des revendications 1 à 19, comprenant un élément de filtre sans coeur.

21. Elément de traitement de fluide selon l'une quelconque des revendications 1 à 20, comprenant en outre des premier et second bouchons d'extrémité, fixés sur la cartouche.

22. Elément de traitement de fluide selon la revendication 21, dans lequel au moins un bouchon d'extrémité comprend un bouchon d'extrémité réglable.

23. Elément de traitement de fluide selon la revendication 21 ou 22, dans lequel au moins un bouchon d'extrémité comprend un matériau conducteur.

24. Elément de traitement de fluide selon l'une quelconque des revendications 1 à 23, dans lequel au moins une zone de traitement de fluide annulaire comprend une zone de filtrage de fluide annulaire.

25. Elément de traitement de fluide selon l'une quelconque des revendications 1 à 24, dans lequel au moins une zone de traitement de fluide annulaire comprend une zone de coalescence de fluide annulaire.

26. Procédé de traitement d'un fluide comprenant :
de faire passer le fluide à travers l'élément de traitement de fluide selon l'une quelconque des revendications 1 à 25.

27. Procédé selon la revendication 26, comprenant de filtrer le fluide.

28. Procédé selon la revendication 26 ou 27, comprenant de séparer des phases présentes dans le fluide.

29. Procédé selon l'une quelconque des revendications 26 à 28, comprenant en outre de nettoyer l'élément de traitement de fluide.

30. Procédé selon la revendication 29, dans lequel nettoyer l'élément de traitement de fluide comprend de laver à contre-courant l'élément de traitement de fluide.
